# DEMANDE DE BREVET EUROPEEN

(11) **EP 3 581 741 A1**
(43) Date de publication de la demande: **18.12.2019**
(21) Numéro de dépôt: 19162453.5
(22) Date de dépôt: 13.03.2019
(51) Int. Cl.: E05B 81/78, E05B 81/90

(54) **COMMANDE D'OUVERTURE A DEVERROUILLAGE MECANIQUE DE SECOURS**

(30) Priorité: 21.03.2018 FR 1870319
(71) Demandeur: Akwel Vigo Spain SL, 36213 Vigo Pontevedra (ES)
(72) Inventeur: COUTO MAQUIEIRA, Delmiro Javier, 36157 PONTEVEDRA (ES); DIEZ ESTEVEZ, Alberto, 36419 PONTEVEDRA (ES); CASAL GOMEZ, Javier, 36205 VIGO (ES); GONZALEZ NOVO, Javier, 36331 VIGO (ES)

(57) **Abrégé**

La commande (10) comprend un support (12) fixe destiné à être monté sur l'ouvrant, une poignée (14) montée mobile sur le support (12), un mécanisme (30) d'activation électrique et mécanique d'un déverrouillage d'une serrure de l'ouvrant du véhicule automobile respectivement pour actionner électriquement et mécaniquement le déverrouillage de la serrure, le mécanisme (30) étant couplé mécaniquement avec la poignée (14) du véhicule de telle sorte que l'application d'un effort prédéfini de traction sur la poignée (14) entraîne l'activation électrique ou mécanique du déverrouillage de la serrure. Le mécanisme (30) d'activation comprend un premier levier (40) d'activation électrique de la serrure et un deuxième levier (60) d'activation mécanique de la serrure montés mobiles l'un par rapport à l'autre.

## Description

La présente invention concerne une commande d'ouverture pour ouvrant de véhicule automobile, coopérant avec une serrure à actionnement électrique, connue également sous l'expression « serrure électronique » ou connue selon la terminologie anglo-saxonne « electronic latch » ou « e-latch ». L'Invention concerne plus particulièrement une commande d'ouverture extérieure qui comprend des moyens de déverrouillage mécanique de secours en cas de défaillance des moyens d'actionnement électrique de la serrure.

De façon générale, une commande d'ouverture extérieure comprend un support fixe destiné à être monté sur l'ouvrant et une poignée montée mobile sur le support, par exemple montée pivotante sur le support en étant articulée en rotation autour d'un axe. La commande d'ouverture comprend également un mécanisme, qui lorsque la poignée est manœuvrée en traction, déverrouille la serrure permettant ainsi l'ouverture de la porte.

Généralement, l'ouverture d'un ouvrant d'un véhicule automobile, par exemple une porte du véhicule, est réalisée au moyen d'une serrure comprenant un pêne solidaire de la porte apte à coopérer avec une gâche solidaire de la carrosserie. Lors de l'ouverture de la porte depuis l'extérieur du véhicule, le pêne est dégagé de la gâche par actionnement de la commande d'ouverture extérieure.

Dans les commandes d'ouverture classiques, la manœuvre en traction de la poignée par un utilisateur entraîne un levier de transmission destiné à tirer sur une extrémité d'un câble, relié au pêne de la serrure. Ainsi, l'action exercée sur la poignée, se traduit, à travers la chaîne cinématique de la commande d'ouverture, par le dégagement du pêne de la gâche et donc par l'ouverture de la portière. Lorsque l'utilisateur relâche la poignée, celle-ci est ramenée en position de repos par un ressort de rappel.

Certains véhicules automobiles modernes, en particulier dans une gamme de véhicules sophistiquée, peuvent être équipés d'une commande d'ouverture extérieure comprenant une poignée coopérant avec une serrure électronique, permettant d'être actionnée par un utilisateur avec un effort réduit par rapport à l'effort de traction nécessaire dans le cas des poignées mécaniques classiques. En effet, une simple impulsion mécanique de traction sur la poignée provoque le déclenchement d'un entraînement électro-motorisé de la serrure qui la fait passer de façon électrique d'un état verrouillé à un état déverrouillé. L'impulsion mécanique active un micro-rupteur placé dans la commande d'ouverture extérieure qui envoie un signal électrique à un ordinateur de bord du véhicule, ce dernier commande le déverrouillage de la serrure de façon électrique en réponse à cette impulsion mécanique. Ceci procure à l'utilisateur une sensation de confort et d'ergonomie accrue. En particulier, les serrures électroniques offrent de nombreux autres avantages, tels qu'une réduction de la complexité de la serrure et de la poignée ainsi qu'un gain de poids et d'espace dans l'habitacle.

Toutefois, de tels systèmes de poignées à déverrouillage électrique de serrure nécessitent de prévoir une alimentation électrique au niveau notamment de la serrure électrique, telle qu'une batterie, pour fonctionner. En cas de défaillance de cette alimentation électrique, la poignée à déverrouillage électrique n'est pas utilisable et l'utilisateur ne peut pas entrer dans le véhicule. Il est donc nécessaire de disposer d'un mécanisme de secours permettant de déverrouiller la porte du véhicule notamment lorsque la batterie n'a pas suffisamment d'énergie pour que le mécanisme de déverrouillage électrique fonctionne.

On connaît déjà de l'art antérieur, notamment de la demande de brevet européen EP3141679 une commande d'ouverture de porte de véhicule automobile à serrure électronique. Cette commande d'ouverture comprend un levier de poignée et un levier d'activation qui coopère avec le levier de poignée par l'intermédiaire d'une colonne de poignée. Lors de la traction du levier de poignée, le levier d'activation est entraîné d'une position de repos à une première position d'activation électrique puis, en cas de défaillance électrique, après application d'un effort de traction supplémentaire, à une deuxième position d'activation mécanique pour actionner la serrure, par exemple par traction d'un câble Bowden. Le levier d'activation comprend un élément d'entraînement apte à coopérer avec une rampe de forme curviligne.

L'inconvénient de l'art antérieur est que d'une part, il est nécessaire de prévoir une colonne de poignée pour assurer la transmission de l'effort de traction au mécanisme de déverrouillage de secours et que d'autre part, le mécanisme de déverrouillage de secours est relativement encombrant. En outre, le mécanisme permettant de passer d'une position d'activation électrique à une position d'activation mécanique est très sensible au frottement et est dépendant des conditions de graissage et des conditions ambiantes.

L'invention a pour but de remédier à ces inconvénients et de proposer une commande d'ouverture compacte, robuste permettant de façon simple de réaliser un déverrouillage de secours mécanique.

A cet effet, l'invention a pour objet une commande d'ouverture d'un ouvrant de véhicule automobile, du type comprenant :
- un support fixe destiné à être monté sur l'ouvrant,
- une poignée montée mobile sur le support,
- un mécanisme d'activation électrique et mécanique d'un déverrouillage d'une serrure de l'ouvrant du véhicule automobile comprenant des premier et deuxième leviers d'activation respectivement électrique et mécanique du déverrouillage de la serrure, le mécanisme étant couplé mécaniquement avec la poignée du véhicule de telle sorte que l'application d'un effort prédéfini de traction sur la poignée entraîne l'activation électrique ou mécanique du déverrouillage de la serrure,
caractérisé en ce que les premier et deuxième leviers sont montés mobiles en rotation autour d'un axe principal et comprennent respectivement des premier et deuxième moyens d'accouplement rotatif engagés axialement l'un dans l'autre pour coopérer de telle sorte que le premier levier d'activation électrique devient mobile à partir d'un premier seuil d'effort de traction prédéfini correspondant à un premier angle de rotation de la poignée et le levier d'activation mécanique devient mobile avec le premier levier à partir d'un deuxième seuil d'effort de traction prédéfini correspondant à un deuxième angle de rotation supérieur au premier angle.

Grâce à l'invention, la commande d'ouverture peut commander la serrure de façon mixte, de manière électrique - en fonctionnement normal - et de manière mécanique en cas d'indisponibilité de la fonction électrique. En outre, il est possible de commander la serrure électriquement ou mécaniquement en fonction de la course d'ouverture de la poignée.

Le fait que les deux leviers puissent être montés mobiles relativement l'un à l'autre et ne deviennent mobiles que séquentiellement permet une conception à la fois robuste et compacte de la commande d'ouverture.

Une commande d'ouverture selon l'invention peut en outre comporter l'une ou plusieurs des caractéristiques suivantes.

De préférence, le mécanisme comprend encore un arbre de transmission s'étendant axialement selon l'axe principal, monté mobile en rotation sur le support et configuré pour transmettre le couple de rotation du levier de poignée au mécanisme.

Dans un mode de réalisation préféré, les premier et deuxième leviers sont montés co-axialement mobiles en rotation l'un par rapport à l'autre. Ceci permet un agencement compact selon un unique axe.

Dans un mode de réalisation préféré, les premier et deuxième leviers sont reliés respectivement à des premier et deuxième organes élastiques de rappel configurés chacun pour exercer un effort de rappel vers une position de verrouillage de la serrure.

Les deux organes élastiques de rappel permettent de définir la limite entre le fonctionnent électrique et le fonctionnement mécanique. Il y a ainsi le ressort de rappel de levier électrique pour le levier d'ouverture électrique et le ressort de rappel de levier mécanique pour le levier d'ouverture mécanique.

De préférence, le premier organe élastique a une raideur plus faible que le deuxième organe élastique.

Grâce à l'utilisation de deux organes élastiques différents, l'utilisateur pourra ressentir un sur-effort ou point dur lors du passage du fonctionnement électrique au fonctionnement mécanique et empêcher également l'actionnement mécanique inopiné de l'ouverture mécanique par l'application d'un effort excessif de la part de l'utilisateur.

Dans un mode de réalisation préféré, le premier levier ou le deuxième levier comprend un boîtier ouvert à l'une de ses extrémités et muni d'un couvercle à l'autre de ses extrémités et d'une cloison annulaire latérale interne délimitant de part et d'autre de la cloison un espace annulaire interne et un espace annulaire externe pour la réception des deux organes élastiques de façon concentrique l'un par rapport à l'autre.

De préférence, le boîtier comprend une paroi latérale périphérique externe discontinue délimitant avec la cloison interne l'espace annulaire externe.

De préférence, le premier levier comprend des moyens d'activation de moyens électroniques aptes à produire un signal de détection de rotation du premier levier pour commander le déverrouillage électrique de la serrure.

Dans un mode de réalisation préféré, le premier levier comprend une pièce à détection de rotation à profil de came montée solidaire en rotation du premier levier apte à coopérer par contact avec un suiveur de came des moyens électroniques.

Par exemple, la pièce de détection est formée par le couvercle du boîtier.

De préférence, le premier levier et le deuxième levier sont assemblés axialement l'un dans l'autre, de préférence par emboîtement ou emmanchement, libres en rotation relativement l'un par rapport à l'autre à l'intérieur.

De préférence, les deux leviers sont montés sur l'arbre, le premier levier étant solidaire en rotation de l'arbre.

Dans un mode de réalisation préféré, le deuxième levier comprend des moyens de liaison mécanique à élément de transmission mécanique de la serrure, tel qu'un câble.

Dans un mode de réalisation préféré, le deuxième levier comprend un support formant un socle du mécanisme d'activation, le socle étant muni d'une embase comprenant un logement dans laquelle une extrémité d'un câble peut être introduite et retenue formant les moyens de liaison mécanique.

De préférence, la commande d'ouverture comprend un arbre monté en rotation sur le support et sur lequel sont montés coaxialement les deux leviers, le premier levier étant solidaire en rotation de l'arbre.

De préférence, l'arbre comprend une ailette d'extension radiale apte à coopérer avec un élément de la poignée.

De préférence, les moyens d'accouplement comprennent une tige centrale et un manchon cylindrique pourvu d'un corps creux pour recevoir à l'intérieur la tige libre en rotation dans une plage de rotation limitée, par exemple une plage de type quart de tour.

Dans un mode de réalisation préféré, le premier levier comprend une tige centrale pourvue d'un corps creux pour être montée axialement sur l'arbre et le deuxième levier comprend un manchon cylindrique pourvu d'un corps creux pour recevoir à l'intérieur la tige libre en rotation dans une plage de rotation limitée, par exemple une plage de type quart de tour.

Par exemple, la tige et le manchon comprennent des parois respectivement externe et interne pourvues d'éléments circonférentiels de liaison de type à fentes et pattes, en particulier de type à baïonnette.

De préférence, le premier levier et l'arbre de rotation sont couplés en rotation par une liaison de type à cannelures.

Dans un mode de réalisation préféré, la commande d'ouverture comprend un moyen de limitation de la rotation du premier levier par rapport au deuxième levier dans une plage de rotation prédéterminée incluant une butée de fin de course de rotation au-delà de laquelle les deux leviers sont solidaires en rotation.

D'autres caractéristiques et avantages de l'invention apparaîtront à la lumière de la description qui suit, faite en référence aux dessins annexés dans lesquels :
- la figure 1 représente une vue en perspective éclatée d'une commande d'ouverture d'un ouvrant selon l'invention ;
- la figure 2 représente une vue en perspective d'une poignée montée mobile à l'intérieur de la commande d'ouverture de la figure 1 ;
- la figure 3 est une vue à échelle agrandie en perspective d'un mécanisme d'activation électrique de la commande d'ouverture de la figure 1 ;
- la figure 4 est une vue de dessus du mécanisme de la figure 3 ;
- la figure 5 est une vue à échelle agrandie en perspective d'un mécanisme d'activation mécanique de la commande d'ouverture de la figure 1 ;
- la figure 6 est une vue en coupe transversale du mécanisme de la figure 5 ;
- les figures 7 et 8 sont des représentations schématiques du mécanisme d'activation électrique et mécanique de la figure 1 illustrant les principaux aspects de son fonctionnement.

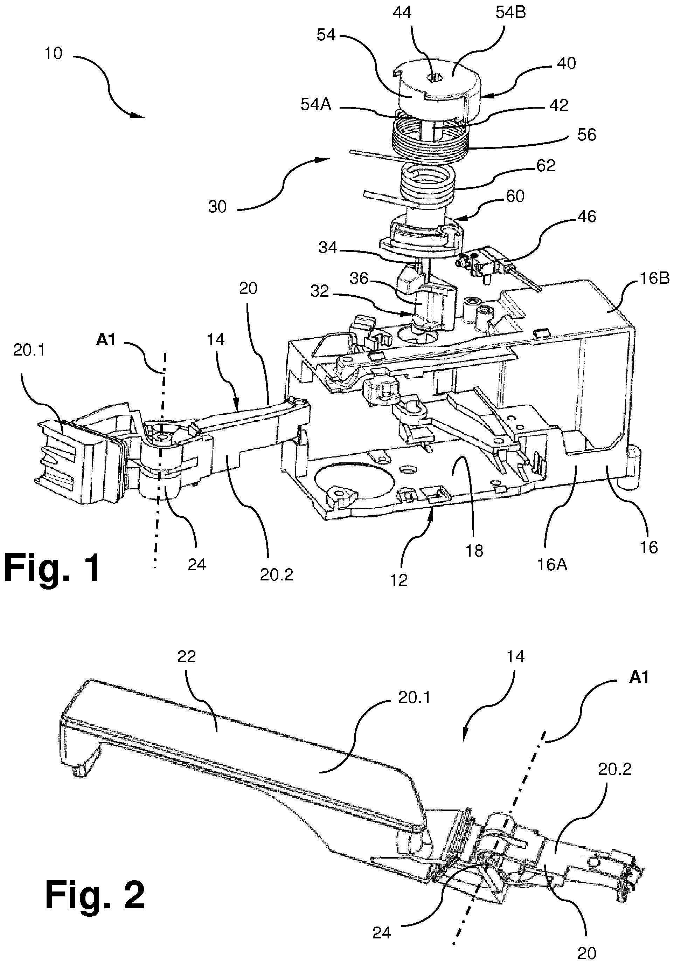

On a représenté de façon schématique sur **la** **figure 1** une commande d'ouverture d'un ouvrant de véhicule automobile selon l'invention. La commande d'ouverture est désignée par la référence générale 10.

La commande d'ouverture 10 est prévue pour être montée sur un panneau extérieur (non représenté) de carrosserie d'un ouvrant qui est par exemple une porte latérale de véhicule.

La commande d'ouverture 10 comporte pour l'essentiel un support fixe 12 de poignée et une poignée 14 montée mobile sur le support 12. En service, le support 12 est destiné à être fixé à l'ouvrant. La poignée 14 est dans l'exemple décrit montée articulée par rapport au panneau, autour d'un axe géométrique de pivotement A1, sur le support 12. L'axe de pivotement A1 est ici sensiblement vertical et s'étend parallèlement au plan général du panneau extérieur.

Dans l'exemple illustré, le support 12 comprend un boîtier 16. Le boîtier 16 a par exemple une forme générale parallélépipédique et est adapté pour être logé dans une découpe ou un évidement du panneau extérieur de l'ouvrant de telle manière que sa face extérieure 16A affleure la surface du panneau extérieur de l'ouvrant. Le boîtier 16 est par ailleurs ouvert du côté de sa face extérieure 16A et fermé par un fond 16B du côté intérieur afin de délimiter un logement 18 destiné à loger la poignée 14.

La poignée 14 est représentée en détail sur **la** **figure 2****.** La poignée 14 comprend un levier 20 configuré pour la préhension par un utilisateur. A cet effet, le levier 20 présente une portion externe 20.1 que l'utilisateur peut saisir et qui n'est illustrée que partiellement sur **la** **figure 1** et dans son intégralité sur **la** **figure 2****.** A l'opposé de la portion externe 20.1, le levier 20 présente une portion interne 20.2 qui est destinée à s'étendre à l'intérieur du logement 18 du boîtier 16 comme cela est visible sur **la** **figure 2****.** De façon classique, sur la portion externe 20.1, le levier 20 inclut une palette 22 de préhension, laquelle a globalement une forme plate et allongée.

Dans l'exemple décrit, la poignée 14 est du type « flush », c'est-à-dire que le support 12 sur lequel la poignée 14 est montée mobile forme une cavité 18 apte à recevoir la poignée 14 en configuration rentrée. Dans cette configuration, la surface extérieure de la poignée 14 affleure la surface extérieure de la paroi extérieure de l'ouvrant. En configuration sortie ou déployée, la poignée 14 sort au moins partiellement de la cavité 18 du support 12 de manière à pouvoir être saisie par un utilisateur du véhicule en vue d'ouvrir la porte. Pour ce faire, l'utilisateur peut déplacer la poignée 14 davantage vers l'extérieur afin de commander la serrure de la porte en vue de son ouverture.

Il est toutefois entendu que d'autres montages mobiles sont envisageables, comme notamment en pivotement suivant un axe situé à une autre position ou encore en translation suivant une direction essentiellement perpendiculaire au plan moyen de la porte. Il est également à noter que le montage mobile de la poignée par rapport au support est connu en soi de l'homme de métier.

Comme cela est visible sur **la** **figure 1****,** le boîtier 16 présente un logement 18 à l'intérieur duquel est destinée à être logée la portion interne 20.2 du levier 20. Le levier 20 est de préférence mobile en rotation par rapport au boîtier 16. A cet effet, la commande d'ouverture 10 comprend une articulation 24 autour de laquelle le levier 20 est articulé en rotation.

Cette commande d'ouverture 10 est destinée à coopérer avec une serrure (non représentée) de l'ouvrant du véhicule automobile susceptible d'adopter une configuration verrouillée et une configuration déverrouillée. De façon classique, le pivotement du levier 20 de poignée 14 autour de son axe d'articulation A1 actionne la serrure dans l'une ou l'autre de ses deux configurations verrouillée ou déverrouillée.

Conformément à l'invention, la commande d'ouverture 10 comprend encore un mécanisme 30 d'activation électrique et mécanique d'un déverrouillage de la serrure respectivement pour actionner électriquement et mécaniquement le déverrouillage de la serrure. En particulier, le mécanisme 30 est couplé mécaniquement avec la poignée 14 du véhicule de telle sorte que l'application d'un effort prédéfini de traction sur la poignée 14 entraîne l'activation électrique ou mécanique du déverrouillage de la serrure.

A cet effet, le mécanisme d'ouverture 30 comprend encore un arbre de transmission 32 monté en rotation sur le support 12 et s'étendant selon cet axe principal A2. Afin de transmettre la rotation du levier de poignée 14 au mécanisme 30, l'arbre 32 comprend une tige 34 d'extension longitudinale selon l'axe principal A2 et une ailette 36 en saillie d'extension radiale à partir de la tige 34 destinée à coopérer avec le levier de poignée 20. Ainsi, l'ailette 36 est par exemple conformée pour coopérer avec l'extrémité du levier de poignée 20. L'ailette 36 comprend par exemple un profil curviligne pour s'adapter à la forme de l'extrémité du levier 20.2.

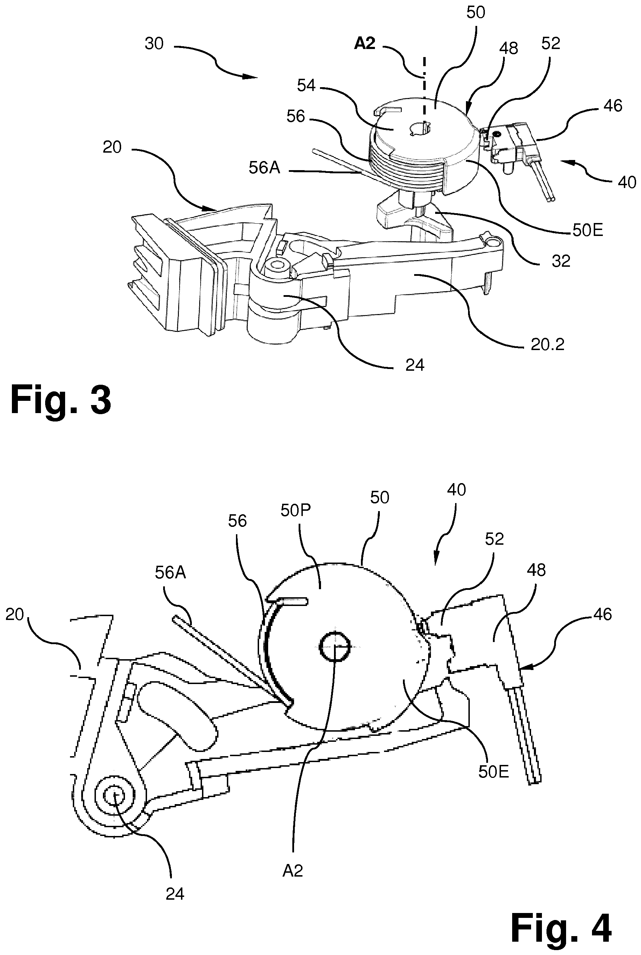

Conformément à l'invention, le mécanisme d'activation 30 comprend un premier levier 40 d'activation électrique de la serrure illustré en détail sur **les** **figures 3 et 4****.**

Selon l'invention, ce premier levier d'activation 40 devient mobile à partir d'un premier seuil d'effort de traction prédéfini appliqué sur le levier de poignée 20 correspondant à un premier angle de pivotement α de la poignée 20. De préférence, le premier levier 40 est monté mobile en rotation autour de l'axe principal A2 du mécanisme 30. Le premier levier 40 est lié en rotation dans cet exemple à l'arbre 32 ce qui permet de transmettre des efforts de rotation.

A cet effet, comme cela est visible sur **la** **figure 4****,** le premier levier 40 comprend une tige centrale 42 pourvue d'un corps creux formant un corps de moyeu pour être montée axialement sur l'arbre de rotation 32. Par exemple, le premier levier 40 et l'arbre de rotation 32 sont couplés en rotation par une liaison de type arbre-moyeu. Par exemple, l'arbre de rotation 32 comprend une région externe de liaison prédéfinie avec une région interne de liaison complémentaire de la tige centrale 42. Ces régions de liaison sont du type par exemple à cannelures 44. Ainsi, l'arbre 32 et la tige 42 sont guidés l'un dans l'autre par les cannelures 44. Bien entendu, d'autres couplages de liaison en rotation de l'arbre 32 et du premier levier 40 peuvent convenir sans sortir du cadre de l'invention.

En outre, la commande d'ouverture 10 comprend encore des moyens de détection électroniques 46 aptes à produire un signal électrique de détection d'une position angulaire prédéfinie du premier levier 40 pour commander le déverrouillage électrique de la serrure (non représentée). Ces moyens électroniques 46 comprennent par exemple un capteur de contact mécanique tel qu'un rupteur, microrupteur, capteur à effet Hall ou autre, apte à générer un signal électrique.

De préférence, le premier levier 40 comprend des moyens 48 d'activation de ces moyens électroniques 46. Par exemple, les moyens d'activation 48 comprennent une pièce 50 à détection de rotation à profil de came montée solidaire en rotation du premier levier 40 apte à coopérer par contact avec un suiveur 52 de came des moyens électroniques 46.

Dans l'exemple illustré sur **la** **figure 4****,** le profil de came 50 comprend une partie principale circulaire 50P définie par un disque de rayon constant centré sur l'axe principal A2 du mécanisme d'ouverture 30. En outre, le profil de came 50 comprend une partie excentrique à rampe 50E en forme de dent pour actionner le rupteur 46. Le rupteur 46 est par exemple monté sur un arbre (non représenté) en regard de la portion de rampe 50E du profil de came 50. Lors de la rotation de la pièce 50 et du passage de la dent 50E au niveau du suiveur de came 52, le rupteur 46 déclenche un changement d'état électrique transmis à un ordinateur de bord du véhicule automobile.

Comme cela est illustré sur la vue en perspective de **la** **figure 3****,** le premier levier 40 comprend un boîtier 54 ouvert à l'une de ses extrémités 54A et muni d'un couvercle 54B à l'autre de ses extrémités, le couvercle 54B formant la pièce de détection 50.

Le premier levier 40 comprend en outre un organe élastique 56 de rappel configuré pour exercer un effort de rappel vers une position de verrouillage de la serrure. Cet organe de rappel élastique 56 est par exemple relié au premier levier 40 d'une part et au support 12 d'autre part. L'organe élastique de rappel 56 comprend dans cet exemple un premier ressort hélicoïdal de torsion.

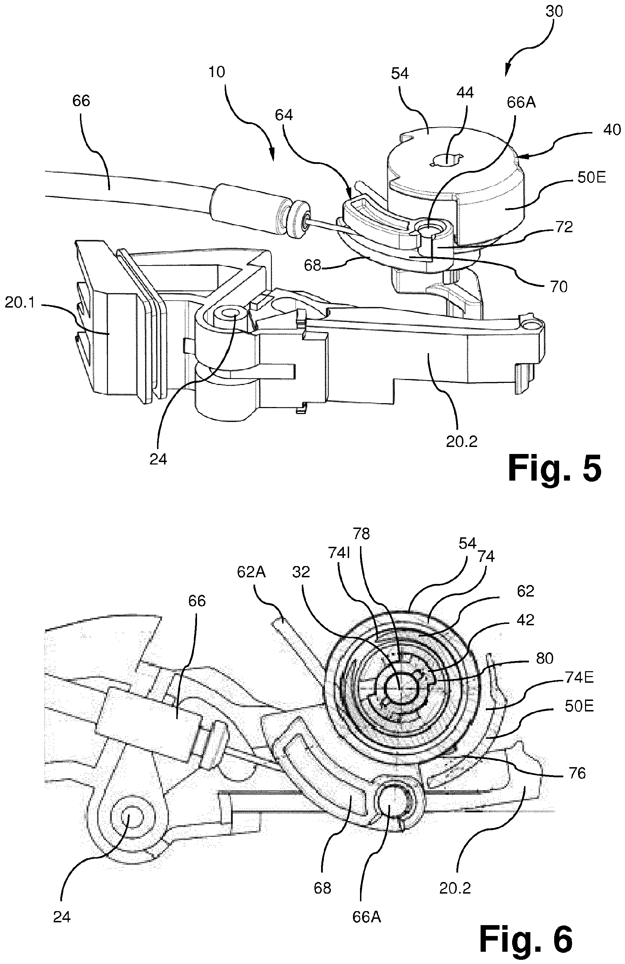

Conformément à l'invention, le mécanisme 30 comprend également un deuxième levier 60 d'activation mécanique de la serrure illustré en détail sur **les** **figures 5 et 6****.** Ce deuxième levier d'activation 60 est relié à un deuxième organe élastique 62 configuré pour exercer un effort de rappel vers une position de verrouillage de la serrure. Ce deuxième organe élastique 62 comprend aussi un ressort de torsion hélicoïdal. Cet organe élastique 62 est relié au deuxième levier 60 d'une part et au support 12 d'autre part. Les ressorts 56 et 62 sont par exemple de type à torsion cylindrique à spires et sont de préférence montés concentriquement sur l'axe A2.

Dans l'exemple décrit, le deuxième levier 60 comprend des moyens de liaison mécanique 64 à un élément de transmission mécanique de la serrure, tel qu'un câble Bowden 66.

De façon structurelle, le deuxième levier 60 comprend un support 68 formant un socle du mécanisme d'activation 30, le socle étant muni d'une embase comprenant un logement dans laquelle une extrémité 66A d'un câble 66 peut être introduite et retenue afin de former les moyens de liaison mécanique.

Dans l'exemple illustré sur **les** **figures 5 et 6****,** le câble 66 comprend une gaine munie à son extrémité proximale 66A d'une tête formant un élément de retenue du câble 66 à l'intérieur du logement 68. Le logement 68 a par exemple un corps de forme générale incurvée munie d'une fente circonférentielle délimitant une gorge de guidage 70 à travers laquelle la gaine du câble 66 peut être insérée radialement et débouchant sur un orifice d'extension axiale par lequel peut s'engager axialement de façon amovible la tête du câble 66A.

Conformément à l'invention, les premier 40 et deuxième 60 leviers sont montés mobiles l'un par rapport à l'autre autour d'un axe principal.

En outre, selon l'invention, les premier 40 et deuxième 60 leviers comprennent respectivement des premier 42 et deuxième 80 moyens d'accouplement rotatif engagés axialement l'un dans l'autre pour coopérer de telle sorte que le premier levier 40 d'activation électrique devient mobile à partir d'un premier seuil d'effort de traction prédéfini correspondant à un premier angle α de rotation de la poignée 14 et le deuxième levier 60 d'activation mécanique devient mobile à partir d'un deuxième seuil d'effort de traction prédéfini supérieur au premier seuil correspondant à un deuxième angle δ de rotation supérieur au premier angle α.

Afin de réaliser cette opération, le premier organe élastique 56 a par exemple une raideur plus faible que le deuxième organe élastique 62.

De préférence, les premier 40 et deuxième 60 leviers sont montés coaxialement mobiles en rotation l'un par rapport à l'autre. De préférence et comme cela est illustré sur **la** **figure 1****,** les deux leviers 40 et 60 sont montés coaxialement sur l'arbre de rotation 32.

Afin de loger les deux organes élastiques de rappel 56 et 62, dans l'exemple décrit, le boîtier 54 du premier levier 40 délimite un logement à la fois pour le premier organe de rappel 56 et pour le deuxième organe de rappel 62. De préférence, le boîtier 54 comprend une cage cylindrique munie d'une cloison annulaire interne 74 délimitant de part et d'autre de la cloison 74 un espace annulaire interne 74I autour de la tige centrale 42 et un espace annulaire externe 74E pour la réception concentrique des deux organes élastiques 56 et 62 de façon concentrique l'un par rapport à l'autre.

En outre, le boîtier 54 comprend une paroi latérale périphérique externe discontinue 76 délimitant avec la cloison interne 74 l'espace annulaire externe 74E.

De préférence, comme cela est illustré en détail sur **la** **figure 6****,** le mécanisme 30 comprend encore un moyen 78 de limitation de la rotation du premier levier 40 par rapport au deuxième levier 60 dans une plage de rotation prédéterminée incluant une butée de fin de course de rotation au-delà de laquelle les deux leviers 40 et 60 sont solidaires en rotation.

De préférence, le premier levier 40 et le deuxième levier 60 sont assemblés axialement l'un dans l'autre, par exemple par emboîtement ou emmanchement, libres en rotation relativement l'un par rapport à l'autre à l'intérieur d'une plage de rotation prédéfinie, par exemple une plage quart de tour.

Par exemple, le deuxième levier 60 comprend un manchon cylindrique 80, formant dans cet exemple le deuxième moyen d'accouplement rotatif pourvu d'un corps creux pour recevoir à l'intérieur la tige centrale 42, libre en rotation, formant le premier moyen d'accouplement rotatif du premier levier 40 dans une plage de rotation limitée, par exemple une plage de type quart de tour. A cet effet, par exemple, la tige 42 et le manchon 80 comprennent des parois respectivement externe et interne pourvues d'éléments circonférentiels de liaison de type à fentes et pattes, en particulier de type à baïonnette formant les moyens de limitation en rotation 78.

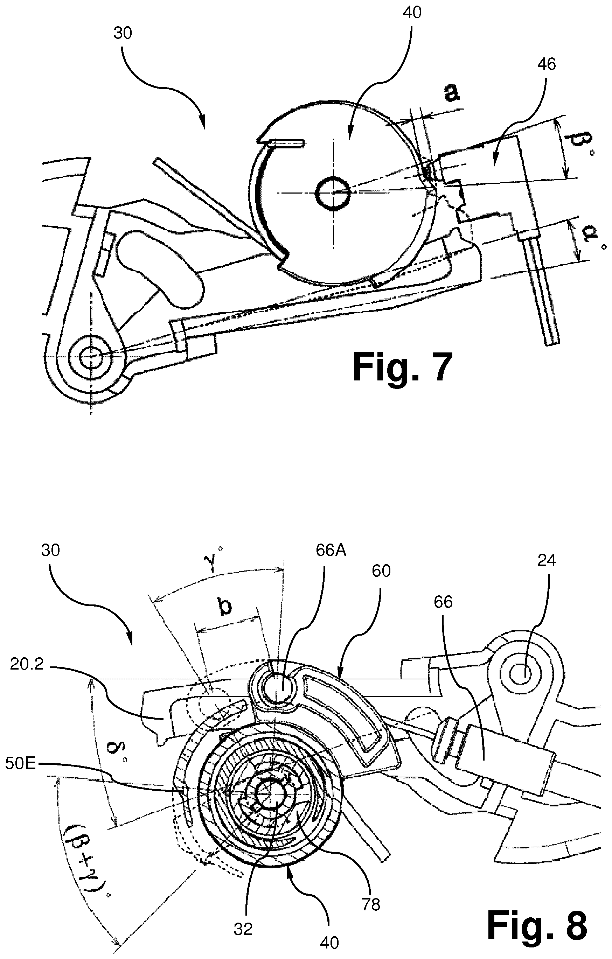

On va maintenant décrire en référence **aux** **figures 7 et 8** les principaux aspects d'une commande d'ouverture selon l'invention.

Initialement, la poignée 14 est dans une configuration rentrée. Dans cette configuration, la serrure reliée à la poignée 14 par la chaîne cinématique d'entraînement de la serrure est dans une configuration verrouillée.

Dans une première étape, un utilisateur applique un premier effort de traction sur la poignée 14 en-deçà d'un premier seuil.

Au préalable, dans le cas d'une poignée dite flush ou affleurante, l'utilisateur doit pousser la poignée 14 légèrement vers l'intérieur pour permettre à ladite poignée de rentrer dans la cavité sous l'effet d'une pression exercée sur ladite poignée depuis l'extérieur vers la cavité de réception, en vue de passer ensuite de la configuration rentrée à la configuration déployée. La configuration rentrée correspond à la configuration dite « flush ».

Le premier effort de traction a pour effet de mettre en rotation l'arbre 32 par l'intermédiaire de l'ailette 36 et du bras de commande 20.2 du levier 20. Ainsi, comme cela est illustré sur **la** **figure 7****,** suite au premier effort de traction, le levier 20 effectue une rotation d'un angle « α » ce qui a pour effet de faire tourner l'arbre 32 d'un angle « β ».

Comme l'arbre 32 et le premier levier 40 comprennent des régions de liaison à cannelures, le premier levier 40 et l'arbre 32 sont solidaires en rotation et le premier levier 40 effectue aussi une rotation d'un angle « β ». La rotation d'un angle « β » provoque le passage de la dent 50E au niveau du suiveur de came 52 ce qui a pour effet de provoquer un déplacement d'une distance « a » du suiveur de came. Ce déplacement a pour effet de déclencher une action électrique des moyens électroniques 46 du véhicule automobile entraînant le déverrouillage de l'ouvrant de façon électrique.

Le deuxième levier 60 reste lui immobile. En effet, le déplacement du premier levier 40 s'effectue à l'intérieur de la limite de la plage quart de tour, ce qui fait que la rotation du premier levier 40 d'un angle « α » ne produit pas d'effet d'entraînement en rotation du deuxième levier 60.

Au cours d'une deuxième étape, par exemple lors d'une panne électrique, l'utilisateur poursuit l'effort de traction de la poignée jusqu'à atteindre un deuxième seuil d'activation mécanique. Ceci provoque la rotation d'un angle « δ » du levier de commande 20.2.

Dans ce cas, l'arbre 32 tourne alors d'un angle additionnel « γ » et le premier levier 40 solidaire de l'arbre 32 également. Cette rotation supplémentaire provoque la mise en butée de la tige centrale 42 du premier levier 40 contre le manchon 80 du deuxième levier 60 par l'intermédiaire de la liaison à baïonnette. Le premier levier 40 et le deuxième levier 60 deviennent solidaires en rotation de sorte que l'embase 68 se déplace d'une distance « b » qui provoque une traction du câble Bowden. Cette traction du câble résulte en le déverrouillage mécanique de la serrure.

L'invention ne se limite pas aux modes de réalisation précédemment décrits. D'autres modes de réalisation à la portée de l'homme du métier peuvent aussi être envisagés sans sortir du cadre de l'invention définie par les revendications ci-après.

## Revendications

1. Commande (10) d'ouverture d'un ouvrant de véhicule automobile, du type comprenant :
- un support (12) fixe destiné à être monté sur l'ouvrant,
- une poignée (14) montée mobile sur le support (12),
- un mécanisme (30) d'activation électrique et mécanique d'un déverrouillage d'une serrure de l'ouvrant du véhicule automobile comprenant des premier (40) et deuxième (60) leviers d'activation respectivement électrique et mécanique du déverrouillage de la serrure, le mécanisme (30) étant couplé mécaniquement avec la poignée (14) du véhicule de telle sorte que l'application d'un effort prédéfini de traction sur la poignée (14) entraîne l'activation électrique ou mécanique du déverrouillage de la serrure,
**caractérisé en ce que** les premier (40) et deuxième (60) leviers sont montés mobiles en rotation autour d'un axe principal (A2) et comprennent respectivement des premier (42) et deuxième (80) moyens d'accouplement rotatif engagés axialement l'un dans l'autre pour coopérer de telle sorte que le premier levier d'activation électrique (40) devient mobile à partir d'un premier seuil d'effort de traction prédéfini correspondant à un premier angle (α) de rotation de la poignée et le levier d'activation mécanique (60) devient mobile avec le premier levier (40) à partir d'un deuxième seuil d'effort de traction prédéfini correspondant à un deuxième angle de rotation (δ) supérieur au premier angle (α).

2. Commande (10) selon la revendication précédente, dans laquelle le mécanisme (30) comprend encore un arbre de transmission (32) s'étendant axialement selon l'axe principal (A2), monté mobile en rotation sur le support (12) et configuré pour transmettre le couple de rotation du levier de poignée (14) au mécanisme (30)

3. Commande (10) selon la revendication précédente, dans lequel les deux leviers (40, 60) sont montés sur l'arbre (32), le premier levier (40) étant solidaire en rotation de l'arbre (32).

4. Commande d'ouverture (10) selon la revendication 2 ou 3, dans laquelle le premier levier (40) et l'arbre de rotation (32) sont couplés en rotation par une liaison de type arbre-moyeu.

5. Commande d'ouverture (10) selon l'une quelconque des revendications 2 à 4, dans laquelle l'arbre de transmission (32) comprend une tige (34) d'extension longitudinale selon l'axe principal (A2) et une ailette (36) en saillie d'extension radiale à partir de la tige (34) destinée à coopérer avec une portion interne (20.2) du levier de poignée (20).

6. Commande d'ouverture (10) selon l'une quelconque des revendications précédentes, dans laquelle le premier levier (40) et le deuxième levier (60) sont assemblés axialement l'un dans l'autre, de préférence par emboîtement ou emmanchement, libres en rotation relativement l'un par rapport à l'autre à l'intérieur d'une plage de rotation limitée, par exemple une plage de type quart de tour.

7. Commande d'ouverture (10) selon l'une quelconque des revendications précédentes, dans laquelle les moyens d'accouplement (42, 80) comprennent une tige centrale (42) et un manchon cylindrique (80) pourvu d'un corps creux pour recevoir à l'intérieur la tige (42) libre en rotation dans une plage de rotation limitée, par exemple une plage de type quart de tour.

8. Commande d'ouverture (10) selon la revendication précédente, dans laquelle la tige (42) et le manchon (80) comprennent des parois respectivement externe et interne pourvues d'éléments circonférentiels de liaison (82) de type à fentes et pattes, en particulier de type à baïonnette.

9. Commande d'ouverture (10) selon l'une quelconque des revendications précédentes, comprenant un moyen (78) de limitation de la rotation du premier levier (40) par rapport au deuxième levier (60) dans une plage de rotation prédéterminée incluant une butée de fin de course de rotation au-delà de laquelle les deux leviers (40, 60) sont solidaires en rotation.

10. Commande d'ouverture (10) selon l'une ou l'autre des revendications précédentes, dans laquelle les premier (40) et deuxième (60) leviers sont reliés respectivement à des premier (56) et deuxième (62) organes élastiques de rappel configurés chacun pour exercer un effort de rappel vers une position de verrouillage de la serrure.

11. Commande d'ouverture (10) selon la revendication précédente, dans laquelle le premier organe élastique (56) a une raideur plus faible que le deuxième organe élastique (62).

12. Commande d'ouverture selon la revendication 10 ou 11, dans laquelle les premier (56) et deuxième (62) organes élastiques sont agencés de façon concentrique l'un par rapport à l'autre.

13. Commande d'ouverture selon l'une quelconque des revendications 10 à 12, dans laquelle l'un des premier ou deuxième leviers (40, 60) comprend un boîtier (54) ouvert à l'une de ses extrémités (54A) et muni d'un couvercle (54B) à l'autre de ses extrémités (54B) et d'une cloison annulaire interne (74) délimitant de part et d'autre de la cloison (74) un espace annulaire interne (74I) et un espace annulaire externe (74E) pour la réception des deux organes élastiques (56, 62) de façon concentrique l'un par rapport à l'autre.

14. Commande d'ouverture (10) selon la revendication précédente, dans laquelle le boîtier (54) comprend une paroi latérale périphérique externe discontinue (76) délimitant avec la cloison interne (74) l'espace annulaire externe (74E).

15. Commande d'ouverture (10) selon l'une quelconque des revendications précédentes, dans laquelle le premier levier (40) comprend des moyens d'activation (48) de moyens électroniques (46) aptes à produire un signal de détection de rotation du premier levier (40) pour commander le déverrouillage électrique de la serrure.

16. Commande d'ouverture (10) selon la revendication précédente, dans laquelle le premier levier (40) comprend une pièce (50) à détection de rotation à profil de came montée solidaire en rotation du premier levier (40) apte à coopérer avec les moyens électroniques (46).

17. Commande d'ouverture (10) selon la revendication précédente, dans laquelle la pièce de détection (50) est formée par un couvercle (54B) d'un boîtier (54) du premier levier (40).

18. Commande d'ouverture (10) selon l'une quelconque des revendications précédentes, dans laquelle le deuxième levier (60) comprend des moyens (64) de liaison mécanique à élément de transmission mécanique de la serrure, tel qu'un câble (66).

19. Commande d'ouverture (10) selon la revendication précédente, dans laquelle le deuxième levier (60) comprend un support (68) formant un socle du mécanisme d'activation (30), le socle (68) étant muni d'une embase comprenant un logement dans laquelle une extrémité (66A) d'un câble (66) peut être introduite et retenue formant les moyens de liaison mécanique (64).
